# EUROPÄISCHE PATENTSCHRIFT

(11) **EP 1 640 099 B1**
(45) Veröffentlichungstag und Bekanntmachung des Hinweises auf die Patenterteilung: **09.10.2013**
(21) Anmeldenummer: 05017688.2
(22) Anmeldetag: 13.08.2005
(51) Int. Cl.: B23H 3/04, B23H 3/06

(54) **Elektrode zum elektrochemischen Senken**
Electrode for electrochemical machining
Electrode pour usinage par électrochimie

(30) Priorität: 19.08.2004 DE 102004040217
(43) Veröffentlichungstag der Anmeldung: 29.03.2006
(73) Patentinhaber: MTU Aero Engines AG, 80995 München (DE)
(72) Erfinder: Bayer, Erwin, 85221 Dachau (DE); Bussmann, Martin, 85247 Schwabhausen (DE); Kränzler, Thomas, 88682 Salem (DE); Platz, Albin, 86510 Ried-Baindlkirch (DE); Steinwandel, Jürgen, 88690 Uhldingen-Mühlhofen (DE)

(56) Entgegenhaltungen:
- DE-A1- 1 440 997
- JP-A- 59 169 719
- JP-A- 60 034 227
- US-A- 5 294 309

## Beschreibung

Ein Verfahren zum exakten und sehr präzisen Bearbeiten von Oberflächen stellt das elektrochemische Senken dar. Beim elektrochemischen Senken wird in der Regel mit einer Elektrode die Oberfläche des Werkstückes bearbeitet wobei durch elektrochemische Reaktion des Werkstückes mit dem sich zwischen dem Werkstück und der Elektrode befindlichen Elektrolyt ein Abtragen von Material am Werkstück erfolgt. Bei üblichen Vorgängen des elektrochemischen Senkens wird mit Abständen von der Elektrode zum Werkstück gearbeitet die im Bereich von 1 bis 2 mm liegen können. Zum Erzeugen feinerer Strukturen und Formen kann der Abstand auf Größen im Bereich von 10 bis 50 µm und darunter abgesenkt werden.

Bei einem derartigen elektrochemischem Senken ist die Gefahr eines elektrischen Kontaktes zwischen Elektrode und Werkstück um so größer, je näher die Elektrode am Werkstück geführt wird. Ein solcher Kontakt würde zu einem lokalen Kurzschluss führen, welcher eine Beschädigung sowohl der Elektrode als auch des Werkstücks zur Folge haben kann, so dass nicht nur dieses Werkstück sondern auch nachfolgende Werkstücke unter ungenügender Bearbeitungsgenauigkeit und Präzision sowie Formhaltigkeit leiden können.

Es sind Verfahren bekannt, bei denen ein Erfassen des Abstandes zwischen Elektrode und Werkstück durch Erfassen des Verhältnisses von Spannung zu Strom während des Bearbeitens ermittelt wird. Das Auftreten eines Kurzschlusses soll dann durch elektronische Maßnahmen verhindert werden, insbesondere durch eine entsprechende Regelung des Verfahrwegs der Elektrode. Bei einem Werkstück das lokale Störungen der Oberfläche aufweist, insbesondere einzelne Spitzen die über die abzusenkende Fläche lokal herverstehen, kann eine solche Abstandsregelung versagen und es kann dennoch zu einem lokalen Überschlag kommen. Auch die dabei auftretende Beschädigung der Elektrode kann sich auf der Endkontur des zu bearbeitenden Werkstücks abzeichnen, dies auch dann, wenn am Bauteil in der Kurzschlusssituation noch ausreichend Aufmaß vorhanden war.

Das Dokument US 5 294 309 A, welches als nächstliegender Stand der Technik anzusehen ist, betrifft ein Verfahren zum elektro-abrasiven Polieren der Innenoberflächen von metallischen Rohren. Dabei wird ein elektrochemisches Abtragen mit einem mechanischen Schleifen bzw. Polieren kombiniert. Die hier verwendete, elektrisch leitende Elektrode ist außenseitig mit einer elektrisch isolierenden Schicht überzogen, welche z.B. aufgrund ihrer Porosität elektrolytdurchlässig und somit stromdurchlässig ist. Die isolierende Schicht ist zusätzlich mit abrasiven Partikeln versehen. Somit kann die Elektrode mit ihrer äußeren, isolierenden Schicht die Bauteiloberfläche berühren/bearbeiten ohne dass es zu einem Kurzschluss kommt.

Das Dokument DE 14 40 997 A1 offenbart ein Elektrodenwerkzeug, dessen Elektrodenoberfläche stellenweise mit Isolierelementen versehen ist. Die Isolierelemente fungieren als Abstandshalter, mit denen das Elektrodenwerkzeug in direkten Kontakt mit dem zu bearbeitenden Bauteil gebracht werden kann, ohne einen Kurzschluss zu erzeugen. Die Isolierelemente sind hier nicht elektrolytdurchlässig und reduzieren somit die wirksame Elektrodenoberfläche.

Das Dokument JP 59 169719 A betrifft wiederum ein Verfahren zum kombinierten elektrochemischen und mechanischen Abtragen/Polieren. Die Elektrode ist mit einer elektrolytdurchlässigen und mechanisch abrasiven Isolierschicht versehen. Außerdem weist sie einen Zufuhrkanal für den Elektrolyt in ihren Kern auf.

Das Dokument JP 60 034227 A offenbart ein vergleichbares Kombiverfahren mit Elektrodenwerkzeug.

Aufgabe der Erfindung ist es, eine Elektrode mit optimiertem Senkverhalten bereit zu stellen, bei der es zwischen Elektrode und Werkstück nicht zu Kurzschlüssen kommen kann. Die der Erfindung zu Grunde liegende Aufgabe wird durch eine Elektrode gemäß dem Anspruch 1 gelöst. Erfindungsgemäß ist der Elektrolyt vom Zufuhrkanal der Elektrode durch ein Lochmuster in eine poröse Zwischenschicht einleitbar, an welche sich aussenseitig die Isolationsschicht anschließt.

Eine Elektrode zum elektrochemischen Senken eines zu bearbeitenden Werkstücks weist eine vorgegebene Kontur auf. Sie besteht aus elektrisch leitendem Material. Das elektrisch leitende Material vorgegebener Kontur bildet den Elektrodenkern. Der Elektrodenkern ist außenseitig mit einer Isolationsschicht überzogen. Die Isolationsschicht ist porös ausgebildet und besteht aus einem elektrisch nicht leitenden Material.

Durch die elektrodenkernumgebende Isolationsschicht aus elektrisch nicht leitendem Material ist zum einen sichergestellt, dass es zu keinem direkten Kontakt zwischen Elektrodenkern und Werkstück kommen kann. Durch die Isolationsschicht wird daher das Entstehen eines Kurzschlusses zwischen diesen beiden Teilen verhindert, es ist jeweils stets ein ausreichender Übergangswiderstand zwischen den beiden Teilen Elektrodenkern und Werkstück gegeben, so dass der Stromfluss einen Grenzwert nicht überschreitet.

Durch die Porosität der Isolationsschicht ist es möglich, dass der Elektrolyt, welcher die Elektrode umgibt und die elektrische Kontaktierung zum Werkstück herstellt, das Material der Isolationsschicht eindringen kann und einen Strcmfluss über die Poren und die porösen Bereiche hinweg zum Werkstück hin weiterhin ermöglicht. Durch diesen begrenzten Stromfluss kann weiterhin ein Erodieren und ein durch die Erosion bedingtes Abtragen von Material des Werkstückes erfolgen. Die Funktionalität der Elektrode zum elektrochemischen Senken wird daher durch die Isolationsschicht nicht beeinträchtigt. Durch die Einleitung des Elektrolyts von Zufuhrkanal durch ein Lochmuster in eine poröse Zwischenschicht und dann in die Isolationsschicht wird eine besonders gleichmäßige Elektrolytverteilung erzielt.

Es entspricht einer vorteilhaften Ausgestaltung der Erfindung, wenn die Porosität der Isolationsschicht so gewählt ist, dass ein Stromfluss zwischen Elektrode und Werkstück sichergestellt ist. Gemäß vorteilhafter Ausgestaltung ist darauf zu achten, dass ein ausreichender Austausch an Elektrolyt im Bereich der Isolationsschicht gewährleistet ist. Gemäss weiter vorteilhafter Weise ist die Schichtdicke der Isolationsschicht so gewählt, dass ein Masseschluss vom Elektrodenkern zum bearbeitenden Werkstück auch bei Oberflächenkontakt vermieden ist. Die Dicke der Isolationsschicht ist somit abhängig von der Form der Elektrode sowie von der Spannung, die zwischen Werkstück und Elektrode gelegt ist. Gemäss weiterführender Ausgestaltung kann insbesondere vorgesehen sein, dass die Schichtdicke der Isolationsschicht so bemessen ist, dass der sich ausbildende Strom bei Oberflächenkontakt zwischen Isolationsschicht und Werkstück einen Grenzwert nicht übersteigt, also ein Mindestwiderstand eingehalten ist. Der Wert ist insbesondere so bestimmt, dass der Stromfluss nicht zu einer Beschadigung der Elektrode und des Werkstückes führt, jedoch zumeist größer gewählt als der maximale zulässige Stromfluss während des Fortschreitens der Bearbeitung unter normalen Bedingungen. Die Schichtdicke ist dann so gewählt, dass bei einem Einhalten eines Sollabstandes, beispielsweise im Bereich von 10 bis 50 µm zwischen Elektrodenkern und Werkstück ein Stromfluss eingestellt ist, nämlich der Nennarbeitsstrom. Somit ist weiterhin ein günstiger Vorschub und eine günstige Bearbeitungsgeschwindigkeit für das Fortschreiten des Verfahrens gewährleistet.

Es entspricht vorteilhafter Ausgestaltung der Erfindung, wenn das Material der Isolationsschicht eine Oxydschicht ist z.B. Aluminiumoxid, Zirkonoxid oder Siliziumdioxid. Aluminiumoxid bzw. Zirkonoxid ist ein elektrisch isolierendes Material, das auf Grund seiner mechanischen Härte die Elektrode vor Beschädigung auch bei einem Kontakt am Werkstück schützt. Als thermisch gespritze Schicht weist Aluminiumoxid eine poröse Struktur auf. Alternativ kann vorgesehen sein, dass die Isolationsschicht aus einer organischen Beschichtung gebildet ist. Gemäß einer weiteren Alternative kann das elektrisch nicht leitende Material der Isolationsschicht auch ein keramischer Werkstoff z.B. Karbid, Nitrid oder eine Mischkeramik mit oxidischem, karbischem und/oder nitridischem Anteil, wie insbesondere eine Beschichtung vom Typ TiAlON sein. Auch die Ausbildung der Isolationsschicht aus verschleißfesten Hartstoffen mit organischem Binder entspricht einer vorteilhaften Alternative. Dabei kann das elektrisch nicht leitende Material der Isolationsschicht gemäß vorteilhafter Ausgestaltung eine durch Oxidation auf der Oberfläche gewachsene Schicht sein.

Es entspricht einer weiteren vorteilhaften Ausgestaltung der Erfindung, wenn die Schichtdicke der Isolationsschicht gering gewählt wird, soweit sie dann ihre Aufgabe als strombegrenzende Schicht weiter wahrnimmt. Hierdurch wird der Übergangswiderstand, der durch die Isolationsschicht gebildet wird, möglichst gering gehalten. Schichtdicken einer Isolationsschicht liegen dabei gemäß bevorzugter Ausgestaltung unterhalb von 100 µm, insbesondere unterhalb von 50 µm und vcrzugsweise sogar unterhalb von 10 µm. Durch möglichst geringe Schichten und Schichtdicken wird weiterhin eine große Annäherung der Elektrode mit dem elektrisch leitenden Elektrodenkern an die Oberfläche des zu bearbeitenden Werkstücks ermöglicht und somit die Feinheit der durch das elektrochemische Senken erreichten Strukturgrößen nicht in unnötiger Weise vergrößert. Das Vermeiden eines Kurzschlusses bei Berührung muss aber dennoch gewährt sein.

Die Elektrode weist einen Zufuhrkanal für den Elektrolyt in ihrem Kern auf. Der Zufuhrkanal endet dabei in einem Flächenabschnitt der Elektrode, welche erfindungsgemäß ein Lochmuster aufweist, durch welches hindurch der Elektrolyt auf die Außenseite der Elektrode gelangen kann. Wenigstens im Bereich des Lochmusters, welches sich insbesondere über wenigstens den überwiegenden Teil der dem Werkstück zugewandten Fläche der Elektrode erstreckt, ist eine poröse Zwischenschicht vorgesehen, an welche sich außenseitig die Isolationsschicht anschließt. Der Elektrolyt wird nach dem Durchtritt durch die Löcher des Lochmusters in der porösen Zwischenschicht flächig gleichmäßig verteilt und tritt dann durch die ebenfalls poröse Isolationsschicht hindurch aus der Elektrode heraus.

Dabei ist gemäß bevorzugter Ausgestaltung die Zwischenschicht als thermische Spritzschicht, Metallfilz oder porös gesintertes Metall ausgebildet.

Im Übrigen ist die Erfindung nachfolgend anhand der Zeichnung näher erläutert; dabei zeigt :
- Fig. 1: ein dem Stand der Technik entsprechendes Ausführungsbeispiel einer Einrichtung zum elektrochemischen Senken; und
- Fig. 2: ein erfindungsgemäßes Ausführungsbeispiel einer Einrichtung zum elektrochemischen Senken mit einer in der Elektrode ausgeführten Elektrolytzufuhr.

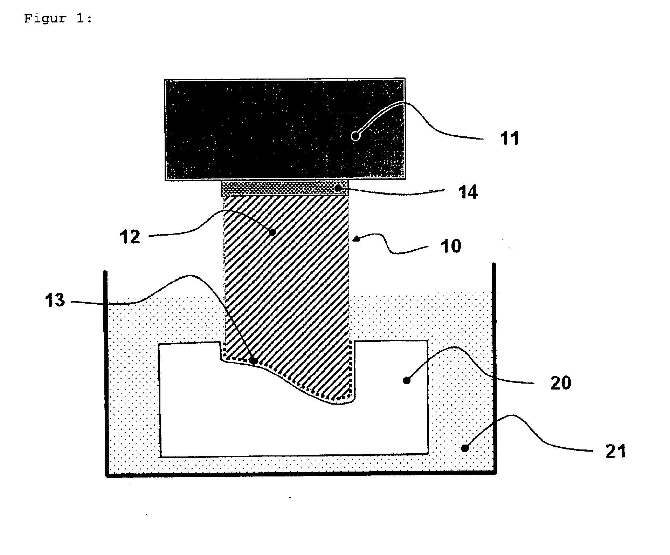

Die Figur 1 zeigt in schematischer Darstellung eine dem Stand der Technik entsprechende Einrichtung zum elektrochemischen Senken eines Werkstücks 20. Zum Senken des Werkstücks wird dieses in ein Bad mit einer elektrolytischen Flüssigkeit 21 gegeben.

Die Elektrode 10 ist bei einem Elektrodenhalter 11 gehalten, welcher verfahrbar ist und somit die Oberfläche des Werkstücks 20 in gezielter Form mittels der Elektrode 10 durch elektrochemisches Senken bearbeiten kann. Die Elektrode 10 besteht dabei aus den elektrisch leitenden Kern 12 welcher von der nicht maßstäblich dargestellten Isolationsschicht 13 umgeben ist. Durch diese Isolationsschicht 13 kann das Elektrolyt 21 bis zum Elektrodenkern 12 vordringen und somit einen elektrischen Stromfluss von Elektrodenkern 12 zu Werkstück 20 ermöglichen. Der Elektrodenkern ist über die Werkzeugaufnahme 11 in nicht dargestellter Weise mit einer elektrischen Spannungsquelle verbunden. Das Werkstück 2C ist innerhalb des Elektrolytbades geerdet gehalten, so dass sich zwischen dem Werkstück 20 und dem Elektrodenkern 12 ein elektrischer Stromfluss ausbildet.

Zwischen dem Elektrodenkern 12 und der Werkzeugaufrahme 11 ist Kraftsensor 14 angeordnet. Der Kraftsensor 14 erfasst eventuell auf Elektrode 10 einwirkende mechanische Kräfte und diese mechanischen Kräfte können nur dann auftreten, wenn eine Berührung zwischen der Elektrode 10 und dem Werkstück 20 gegeben ist. Derartige Berührungen sind im Sinne eines gleichmäßig geregelten Verfahrens zu vermeiden und entsprechende Gegenmaßnahmen bei der Steuerung der Bewegung der Elektrode 10 können in Abhängigkeit der vom Kraftsensor erfassten Kraft eingeleitet werden.

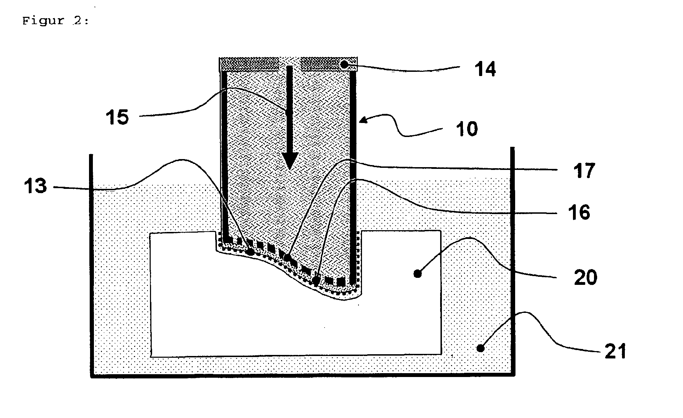

Die Figur 2 zeigt in schematischer Darstellung eine erfindungsgemäße Einrichtung zum elektrochemischen Senken eines Werkstücks 20 mit Zufuhr des Elektrolyten in der Elektrode.

Die Elektrode 10 ist innen hohl und der Elektrolyt (5) wird intern in der Elektrode zugeführt. Der Elektrolyt wird durch ein Lochmuster(17) von der Elektrode in eine poröse, elektrische leitfähige Zwischenschicht (16) geleitet, die vorteilhaft für einen gleichmäßigen Elektrolytaustritt sorgt. Die Zwischenschicht (16) ist mit einer elektrisch isolierenden, porösen Beschichtung (13). Diese Isolationsschicht (13) verhindert wirksam das Auftreten eines Kurzschlusses zwischen Elektrode (10) und Bauteil (20).

## Patentansprüche

1. Elektrode (10) zum elektrochemischen Senken eines zu bearbeitenden Werkstücks (20), wobei die Elektrode (10) eine vorgegebene Kontur aufweist und ein elektrisch leitendes Material enthält, wobei das elektrisch leitende Material vorgegebener Kontur einen Elektrodenkern (12) bildet, wobei der Elektrodenkern (12) außenseitig mit einer Isolationsschicht (13) überzogen ist,wobei die Isolationsschicht (13) porös ist und aus einem elektrisch nicht leitenden Material besteht, und wobei die Elektrode (10) einen Zufuhrkanal für den Elektrolyt (15) in ihrem Kern aufweist, **dadurch gekennzeichnet, dass** der Elektrolyt vom Zufuhrkanal durch ein Lochmuster (17) in eine poröse Zwischenschicht (16) einleitbar ist, an welche sich aussenseitig die Isolationsschicht (13) anschließt.

2. Elektrode (10) nach Anspruch 1, **dadurch gekennzeichnet, dass** die Porosität der Isolationsschicht (13) derart gewählt ist, dass ein Stromfluss zwischen Elektrodenkern (12) und Werkstück (20) möglich ist.

3. Elektrode (10) nach Anspruch 1 oder 2, **dadurch gekennzeichnet, dass** die Schichtdicke der Isolationsschicht (13) so gewählt ist, dass ein Massenschluss vom Elektrodenkern (12) zu einem zu bearbeitenden Werkstück (20) verhindert ist.

4. Elektrode (10) nach einem der vorhergehenden Ansprüche, **dadurch gekennzeichnet, dass** das elektrisch nicht leitende Material der Isolationsschicht (13) ein Oxid, wie insbesondere Aluminiumoxid, Zirkonoxid oder Siliziumdioxid ist.

5. Elektrode (10) nach einem der Ansprüche 1 bis 3, **dadurch gekennzeichnet, dass** das elektrisch nicht leitende Material der Isolationsschicht (13) eine organische Beschichtung ist.

6. Elektrode (10) nach einem der Ansprüche 1 bis 3, **dadurch gekennzeichnet, dass** das elektrisch nicht leitende Material der Isolationsschicht (13) ein keramischer Werkstoff z.B. Karbid, Nitrid oder Mischkeramik mit oxidischem, karbidischem und/oder nitridischem Anteil, wie insbesondere eine Beschichtung vom Typ TiAlON ist.

7. Elektrode (10) nach einem der vorhergehenden Ansprüche, **dadurch gekennzeichnet, dass** das elektrisch nicht leitende Material der Isolationsschicht (13) eine verschleißfeste Schicht aus Hartstoffen mit organischem Binder ist.

8. Elektrode (10) nach einem der vorhergehenden Ansprüche, **dadurch gekennzeichnet, dass** das elektrisch nicht leitende Material der Isolationsschicht (13) eine durch Oxidation auf der Oberfläche gewachsene Schicht ist.

9. Elektrode nach einem der vorhergehenden Ansprüche, **dadurch gekennzeichnet, dass** die Zwischenschicht (16) als thermische Spritzschicht, Metallfilz oder porös gesintertes Metall ausgebildet ist.

10. Elektrode nach einem der vorhergehenden Ansprüche, **dadurch gekennzeichnet, dass** die Schichtdicke der Isolationsschicht (13) kleiner als 100 µm, insbesondere kleiner als 50 µm und vorzugsweise kleiner als 10 µm ist.

## Claims

1. Electrode (10) for the electrochemical reduction of a workpiece (20) to be processed, wherein the electrode (10) has a predetermined outline and contains an electrically conductive material, wherein the electrically conductive material of predetermined outline forms an electrode core (12), wherein the electrode core (12) is covered on the outside with an insulating layer (13), wherein the insulating layer (13) is porous and consists of an electrically non-conductive material, and wherein the electrode (10) has a supply channel for the electrolyte (15) in the core thereof,
**characterised in that**,
the electrolyte is able to be passed from the supply channel through a hole pattern (17) in a porous intermediate layer (16), to the outside of which the insulating layer (13) is connected.

2. Electrode (10) according to claim 1,
**characterised in that**,
the porosity of the insulating layer (13) is chosen in such a way that a flow of electrical current is possible between the electrode core (12) and the workpiece (20).

3. Electrode (10) according to claim 1 or 2,
**characterised in that**,
the layer thickness of the insulating layer (13) is chosen in such a way that ground contact of the electrode core (12) to a workpiece (20) to be processed is prevented.

4. Electrode (10) according to one of the preceding claims,
**characterised in that**,
the electrically non-conductive material of the insulating layer (13) is an oxide, such as, in particular, aluminium oxide, zirconium oxide or silicon dioxide.

5. Electrode (10) according to one of claims 1 to 3,
**characterised in that**,
the electrically non-conductive material of the insulating layer (13) is an organic coating.

6. Electrode (10) according to one of claims 1 to 3,
**characterised in that**,
the electrically non-conductive material of the insulating layer (13) is a ceramic material e.g. a carbide, nitride or mixed ceramic with an oxide, carbide and/or nitride proportion, such as, in particular, a coating of the type TiAlON.

7. Electrode (10) according to one of the preceding claims,
**characterised in that**,
the electrically non-conductive material of the insulating layer (13) is a wear-resistant layer made from hard materials with an organic binder.

8. Electrode (10) according to one of the preceding claims,
**characterised in that**,
the electrically non-conductive material of the insulating layer (13) is a layer grown through oxidation on the outer surface.

9. Electrode according to one of the preceding claims,
**characterised in that**,
the intermediate layer (16) is formed as a thermal spray coating, metal felt or porously sintered metal.

10. Electrode according to one of the preceding claims,
**characterised in that**,
the layer thickness of the insulating layer (13) is smaller that 100 µm, in particular smaller than 50 µm and preferably smaller than 10 µm.

## Revendications

1. Électrode (10) pour l'usinage électrochimique par enfonçage d'une pièce à usiner (20), dans laquelle l'électrode (10) présente un profil prédéfini et contient un matériau électriquement conducteur, le matériau électriquement conducteur à profil prédéfini forme une âme d'électrode (12), l'âme d'électrode (12) est revêtue extérieurement d'une couche isolante (13), la couche isolante (13) est poreuse et constituée d'un matériau électriquement non conducteur, et l'électrode (10) présente un conduit de passage de l'électrolyte (15) dans l'âme, **caractérisée en ce que**, à partir du conduit de passage, l'électrolyte peut être introduit à travers un motif à trous (17) dans une couche intermédiaire poreuse (16) à l'extérieur de laquelle la couche isolante (13) est reliée.

2. Électrode (10) selon la revendication 1, **caractérisée en ce que** la porosité de la couche isolante (13) est choisie de façon à permettre l'établissement d'un courant entre l'âme d'électrode (12) et la pièce (20).

3. Électrode (10) selon la revendication 1 ou la revendication 2, **caractérisée en ce que** l'épaisseur de la couche isolante (13) est choisie de façon à empêcher un court-circuit de l'âme d'électrode (12) à la masse d'une pièce à usiner (20).

4. Électrode (10) selon l'une des revendications précédentes, **caractérisée en ce que** le matériau électriquement non conducteur de la couche isolante (13) est un oxyde, en particulier l'oxyde d'aluminium, l'oxyde de zirconium ou le dioxyde de silicium.

5. Électrode (10) selon l'une des revendications 1 à 3, **caractérisée en ce que** le matériau électriquement non conducteur de la couche isolante (13) est un revêtement organique.

6. Électrode (10) selon l'une des revendications 1 à 3, **caractérisée en ce que** le matériau électriquement non conducteur de la couche isolante (13) est un matériau céramique, par exemple un carbure, un nitrure ou une céramique mixte contenant une fraction de type oxyde, carbure et/ou nitrure telle que, notamment, un revêtement de type TiAlON.

7. Électrode (10) selon l'une des revendications précédentes, **caractérisée en ce que** le matériau électriquement non conducteur de la couche isolante (13) est une couche résistante à l'usure à base de substances dures avec un liant organique.

8. Électrode (10) selon l'une des revendications précédentes, **caractérisée en ce que** le matériau électriquement non conducteur de la couche isolante (13) est une couche produite par oxydation sur la surface.

9. Électrode selon l'une des revendications précédentes, **caractérisée en ce que** la couche intermédiaire (16) est réalisée sous la forme d'une couche déposée par projection thermique, d'un feutre métallique ou d'un métal fritté poreux.

10. Électrode selon l'une des revendications précédentes, **caractérisée en ce que** l'épaisseur de la couche isolante (13) est inférieure à 100 µm, en particulier inférieure à 50 µm et de préférence inférieure à 10 µm.
